# FASCICULE DE BREVET EUROPEEN

(11) **EP 3 624 657 B1**
(45) Date de publication et mention de la délivrance du brevet: **09.06.2021**
(21) Numéro de dépôt: 18726108.6
(22) Date de dépôt: 16.05.2018
(51) Int. Cl.: A47J 43/042, A47J 43/07, A47J 43/046

(54) **APPAREIL DE MIXAGE ET DE MELANGE POUR DES PREPARATIONS ALIMENTAIRES LIQUIDES OU PATEUSES EQUIPE D'UN DISPOSITIF DE VERROUILLAGE DES COUTEAUX SUR LE BOL**
MIX- UND MISCHVORRICHTUNG FÜR FLÜSSIGE ODER PASTÖSE LEBENSMITTELZUBEREITUNGEN, WIE ZUM BEISPIEL EIN MIXER, MIT EINER VORRICHTUNG ZUM VERRIEGELN DER KLINGEN AUF DER SCHÜSSEL
MIXING AND BLENDING APPARATUS FOR LIQUID OR PASTY FOOD PREPARATIONS, SUCH AS A BLENDER, PROVIDED WITH A DEVICE FOR LOCKING THE BLADES ON THE BOWL

(30) Priorité: 17.05.2017 FR 1754373
(43) Date de publication de la demande: 25.03.2020
(73) Titulaire: SEB S.A., 69130 Ecully (FR)
(72) Inventeur: FERON, Stéphanie, 53440 Marcille La Ville (FR); LEMARIE, Christophe, 53470 Martigne Sur Mayenne (FR); QUINTON, Sébastien, 53000 Laval (FR)
(74) Mandataire: SEB Développement
(86) Numéro de dépôt international: PCT/EP2018/062761
(87) Numéro de publication internationale: WO 2018/210943

(56) Documents cités:
- EP-A1- 2 005 869
- EP-A1- 2 404 536
- FR-A- 1 270 285
- US-A1- 2015 250 360

## Description

### Domaine technique

La présente invention concerne les appareils de mixage et de mélange pour des préparations alimentaires liquides ou pâteuses, de tels appareils étant couramment appelés « Blender ».

La présente invention concerne plus particulièrement les appareils du type précité comportant un porte-couteau amovible.

L'objet principal de l'invention est de sécuriser l'appareil pour empêcher son démontage inopiné lors de son utilisation.

### Etat de la technique

De tels appareils sont bien connus de l'homme du métier ; ils comprennent traditionnellement un bol, un porte-couteau, une bague de verrouillage du porte-couteau sur le bol et une base motorisée sur laquelle est engagé l'ensemble prémonté constitué du bol, du porte-couteau et de la bague de verrouillage. La base motorisée comprend un moteur entraînant un arbre muni d'un système d'accouplement qui coopère avec un système d'accouplement complémentaire sur le porte-couteau, lors de l'engagement de l'ensemble prémonté sur la base motorisée.

Sur certains de ces appareils sont apparus des problèmes de sécurité. En effet, lors de la rotation du porte-couteau entraîné à grande vitesse par le moteur, la bague de verrouillage peut tourner avec le porte-couteau, ce qui peut avoir pour incidence que cette bague de verrouillage se dégage du bol au moment où l'utilisateur retire le bol, après avoir mixé une préparation. La préparation liquide ou pâteuse peut donc se répandre sur la base motorisée et l'endommager voire générer des risques d'électrocution de l'utilisateur. Lorsqu'il s'agit de préparations chaudes telles que des soupes, l'utilisateur peut également subir des brûlures.

Il est connu les documents FR 1 270 285, CN 2 657 555 U et CN 103099550A qui prévoient un blocage de la bague de verrouillage sur la base motorisée lors de l'engagement de l'ensemble prémonté sur cette base. Cela permet d'éviter le déverrouillage de la bague de verrouillage lors de la rotation du porte-couteau entraîné par le moteur.

Dans le document FR 1 270 285, le bol est vissé avec la bague de verrouillage. Cette bague de verrouillage comprend sur son contour externe un évidement dans laquelle s'engage une saillie agencée sur le contour interne d'un logement sur la base, lors de l'emboîtement de l'ensemble prémonté dans ce logement. Cela bloque la rotation de la bague de verrouillage et du bol vissé dessus, durant la rotation du porte-couteau.

Dans le document CN 2 657 555 U, le bol est vissé avec la bague de verrouillage. Cette bague de verrouillage dispose sur son contour externe de rainures, tandis que la base dispose d'un logement comprenant sur son contour interne des plots, les rainures et les plots permettant la mise en œuvre d'un système de verrouillage à baïonnette entre la bague de verrouillage et la base.

Dans le document CN 103099550A, le bol est assemblé avec la bague de verrouillage par un premier système de verrouillage à baïonnette. En outre, la bague de verrouillage est elle-même assemblée sur la base par un second système de verrouillage à baïonnette.

Certains risques de démontage de la bague de verrouillage vis-à-vis du bol subsistent tout de même avec les appareils décrits dans ces documents FR 1 270 285, CN 2 657 555 U et CN 103099550A. En effet, ceux-ci ne permettent pas de prémunir l'utilisateur d'un démontage inopiné de la bague de verrouillage vis-à-vis du bol dans les cas où ledit utilisateur n'assemble pas convenablement la bague de verrouillage sur le bol, initialement. L'utilisateur peut effectivement mal visser la bague de verrouillage sur le bol ou mal mettre en place le système de verrouillage à baïonnette entre la bague de verrouillage et le bol.

Un appareil selon les caractéristiques du préambule de la revendication 1 est connu du document EP2005869.

### Résumé de l'invention

La présente invention pallie les inconvénients précités en concevant un appareil qui garantit dans tous les cas d'achever la mise en place du système d'assemblage entre le bol et la bague de verrouillage lors du montage de l'ensemble prémonté - constitué du bol, du porte-couteau et de la bague de verrouillage - sur la base motorisée.

A ce titre, selon l'invention, l'appareil de mixage et de mélange pour des préparations alimentaires comprend :
- un bol muni d'un fond ouvert,
- un porte-couteau configuré pour être engagé dans le fond du bol, le porte-couteau comprenant des couteaux montés rotatifs et des premiers moyens d'accouplement assujettis aux couteaux,
- une bague de verrouillage configurée pour être positionnée sur le fond du bol et maintenir le porte-couteau engagé dans ledit fond, un premier système d'assemblage étant agencé entre le bol et la bague de verrouillage, le premier système d'assemblage entre le bol et la bague de verrouillage mettant en œuvre une rotation du bol par rapport à la bague de verrouillage, ou vice-versa
- une base comprenant des moyens d'entrainement en rotation de seconds moyens d'accouplement complémentaires aux premiers moyens d'accouplement et une zone de réception configurée pour recevoir un ensemble prémonté constitué du bol, du porte-couteau et de la bague de verrouillage en accouplant les premiers moyens d'accouplement et les seconds moyens d'accouplement et en logeant la bague de verrouillage dans la zone de réception,
- un système de butée agencé entre la zone de réception et la bague de verrouillage pour bloquer la bague de verrouillage en position assemblée sur le bol, le système de butée étant mis en place lors du montage de l'ensemble prémonté sur la base.

De manière remarquable, selon l'invention, l'appareil comprend un second système d'assemblage agencé entre le bol et la base, ledit second système d'assemblage entre le bol et la base mettant en œuvre une rotation du bol par rapport à la base, ou vice-versa, ledit second système d'assemblage étant mis en place lors du montage de l'ensemble prémonté sur la base. Le montage de l'ensemble prémonté sur la base est ainsi réalisé par un assemblage entre le bol et la base, contrairement aux appareils antérieurs précités qui prévoient un montage de l'ensemble prémonté par un assemblage entre la bague de verrouillage et la base. En outre, une fois le bol assemblé avec la base, le système de butée s'oppose à toute rotation éventuelle de la bague de verrouillage durant la rotation du porte-couteau.

Selon l'invention, le système de butée est configuré pour achever si nécessaire la mise en place du premier système d'assemblage entre la bague de verrouillage et le bol par rotation du bol par rapport à la bague de verrouillage, ou vice-versa, lors de la mise en place du second système d'assemblage entre le bol et la base, second système d'assemblage entre le bol et la base par rotation du bol par rapport à la base, ou vice-versa. Ainsi, lorsque l'utilisateur a mal assemblé initialement la bague de verrouillage sur le bol, la configuration du système de butée garantit dans tous les cas que cet assemblage sera convenablement finalisé durant l'assemblage du bol sur la base, ce qui évite tout démontage inopiné de la bague de verrouillage lors du retrait du bol de la base en fin de préparation.

Selon une réalisation de l'appareil, le premier système d'assemblage est du type à baïonnette. On pourrait toutefois envisager un premier système d'assemblage de type vissage, sans sortir du cadre de l'invention.

Selon cette réalisation, le premier système d'assemblage comprend au moins une dent agencée sur un contour interne de la bague de verrouillage et au moins un élément saillant en forme de crochet agencé sur un contour externe du bol pour recevoir ladite dent par un mouvement de rotation de la bague de verrouillage sur le bol. De préférence, le premier système d'assemblage comprend au moins deux dents et au moins deux éléments saillants uniformément répartis respectivement sur le contour interne de la bague de verrouillage et sur le contour externe du bol. Chacune des dents s'engage respectivement dans l'un des éléments saillants. Selon une forme de réalisation préférée, le premier système d'assemblage comprend quatre dents et quatre éléments saillants uniformément répartis respectivement sur le contour interne de la bague de verrouillage et sur le contour externe du bol. Les quatre dents s'engagent respectivement dans les quatre éléments saillants.

Selon une réalisation de l'appareil, le second système d'assemblage est du type à baïonnette. De même, on pourrait envisager un second système d'assemblage de type vissage, sans sortir du cadre de l'invention.

Selon cette réalisation, le second système d'assemblage comprend au moins une ailette agencée sur un contour externe du bol et au moins une rainure agencée sur un contour interne de la zone de réception pour recevoir ladite ailette par un mouvement de baïonnette. Selon une forme de réalisation préférée, ladite au moins une ailette est directement issue du bol. De préférence, le second système d'assemblage comprend deux ailettes et deux rainures disposées symétriquement respectivement sur le contour externe du bol et sur le contour interne de la zone de réception. Cela offre deux positionnements possibles de l'ensemble prémonté sur la base. Selon une forme de réalisation préférée, les deux ailettes sont directement issues du bol.

Selon une réalisation de l'appareil, le système de butée comprend au moins un doigt agencé dans un fond de la zone de réception et au moins une lumière circulaire agencée dans un fond de la bague de verrouillage, le doigt s'engageant dans la lumière circulaire en correspondance avec ledit doigt lors du logement de la bague de verrouillage dans la zone de réception. De préférence, le système de butée comprend un doigt dans le fond de la zone de réception et quatre lumières circulaires uniformément réparties dans le fond de la bague de verrouillage. Cela permet plusieurs positions possibles du bol lors de son montage sur la base. On pourrait envisager deux doigts disposés symétriquement dans le fond de la zone de réception et quatre lumières circulaires uniformément réparties dans le fond de la bague de verrouillage.

Selon cette réalisation de l'appareil, l'au moins une lumière circulaire et le second système d'assemblage sont configurés pour permettre le montage du bol sur la base et la mise en place du système de butée par une rotation du bol sur la base de l'ordre de quinze à vingt-cinq degrés (15° à 25°), de préférence égale à vingt degrés (20°). Cela permet de limiter les mouvements du poignet et du bras de l'utilisateur lors du verrouillage du bol sur la base, pour une bonne ergonomie d'utilisation de l'appareil.

Selon l'invention, le bol comprend une collerette configurée pour délimiter la position d'enfoncement de la bague de verrouillage dans la zone de réception.

### Brève description des figures

Les caractéristiques et avantages de l'invention apparaîtront à la lecture de la description suivante s'appuyant sur des figures, parmi lesquelles :
- la figure 1 illustre une vue d'ensemble d'un mode de réalisation de l'appareil selon l'invention ;
- la figure 2 illustre une vue en coupe de côté de l'appareil de la figure 1 ;
- la figure 3 illustre la base motorisée de cet appareil ;
- la figure 4 illustre l'ensemble prémonté constitué du bol, du porte-couteau et de la bague de verrouillage ;
- la figure 5 illustre le bol avec le porte-couteau engagé dans le bol ;
- la figure 6 illustre une vue de dessous du bol ;
- la figure 7 illustre le porte-couteau ;
- les figures 8 et 9 illustrent deux vues de la bague de verrouillage ;
- la figure 10 illustre une vue en coupe mettant en évidence le fond de la bague de verrouillage dans la zone de réception de la base ;
- la figure 11 illustre une vue en coupe du porte-couteau engagé dans la bague de verrouillage ;
- la figure 12 illustre une vue partielle agrandie de la bague de verrouillage en position dans la zone de réception sur la base de l'appareil.

### Description détaillée

La description suivante porte sur un mode de réalisation de l'appareil de mixage et de mélange pour des préparations alimentaires liquides ou pâteuses, chaudes ou froides, par exemple des soupes ou des milkshakes, un tel appareil étant généralement appelé un « blender ». Dans la suite de la description, le terme « appareil » sera utilisé.

Dans la suite de la description, les mêmes références sont utilisées pour désigner les mêmes caractéristiques, sauf indication contraire.

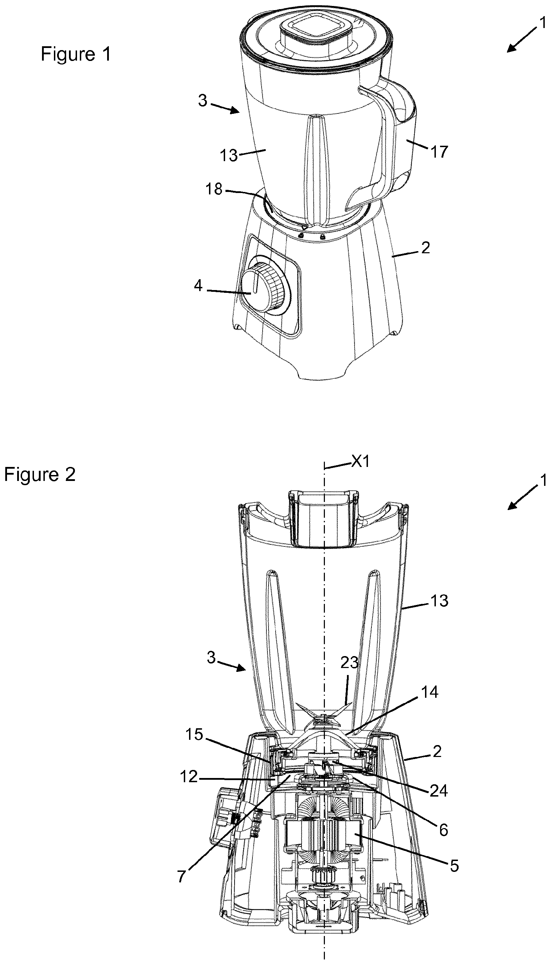

Tel qu'illustré sur les figures 1 à 4, l'appareil 1 comprend une base 2 sur laquelle vient se monter un ensemble prémonté 3. La base 2 intègre notamment un bouton de commande 4 qui permet d'actionner un moteur électrique 5, lequel entraîne en rotation selon un axe X1 une première pièce d'accouplement 6.

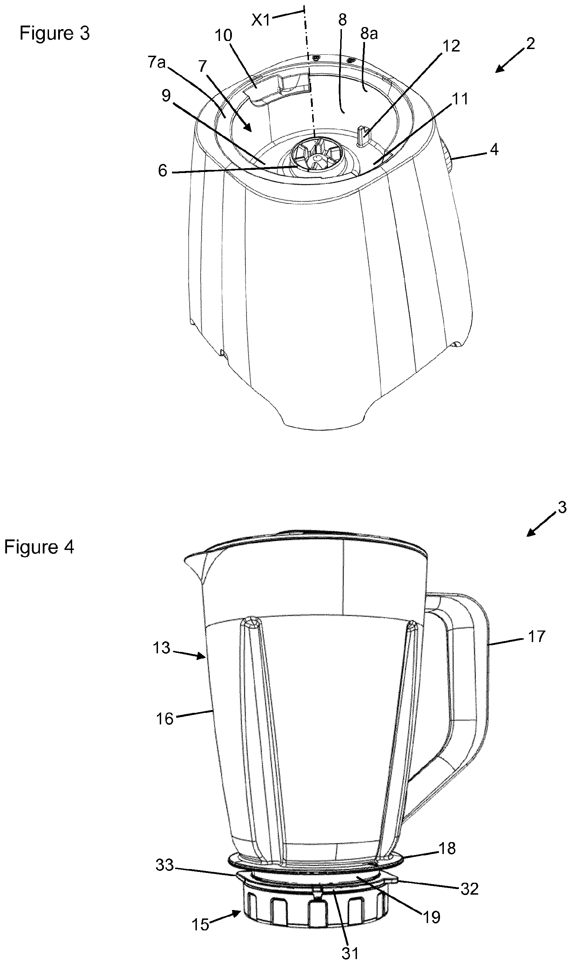

Tel qu'illustré sur la figure 3, la base 2 comprend une zone de réception 7 qui comprend un contour interne 8 et un fond 9 duquel émerge en son centre la première pièce d'accouplement 6. Le contour interne 8 comprend, sur sa partie supérieure 8a, deux rainures 10, 11 identiques. Les rainures 10, 11 sont disposées symétriquement par rapport à l'axe X1. Ces rainures 10, 11 débouchent sur un bord supérieur cylindrique 7a de la zone de réception 7 et présentent une forme préférentielle telle qu'illustrée en figure 3. Un doigt 12 émerge du fond 9 à proximité du contour interne 8, comme l'illustre la figure 3.

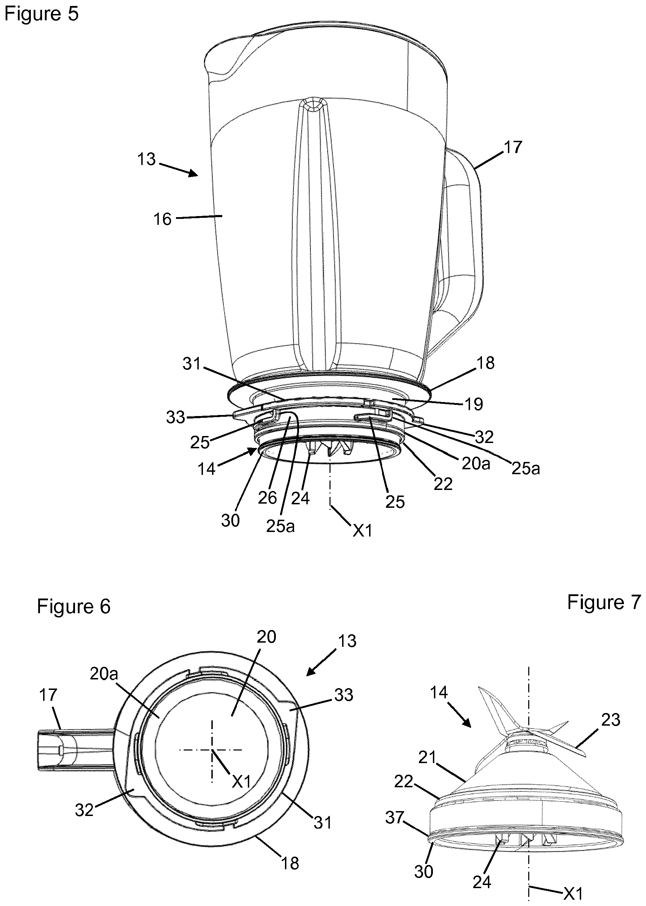

Tel que l'illustrent les figures 4 à 9, l'ensemble prémonté 3 est constitué d'un assemblage d'un bol 13, d'un porte-couteau 14 et d'une bague de verrouillage 15. Tel que bien visible sur les figures 7 à 9 le porte-couteau 14 est amovible par rapport à la bague de verrouillage 15.

Comme le montrent les figures 5 à 7, le bol 13 comprend un contenant 16 de forme allongée muni d'une poignée 17 permettant la manipulation de l'ensemble prémonté 3. Le bol 13 comprend une collerette 18 qui sépare le contenant 16 d'une partie cylindrique inférieure 19. Une ouverture 20 dans le fond du bol 13 permet de loger le porte-couteau 14 dans la partie cylindrique inférieure 19. Le porte-couteau 14 comprend un corps 21 présentant une partie supérieure de forme tronconique adaptée à l'ouverture 20, le corps 21 portant un joint 22 prenant appui sur le bord 20a de l'ouverture 20, ce qui limite la pénétration du porte-couteau 14 dans le bol 13 et assure une étanchéité entre lesdits éléments.

Tel qu'illustré sur la figure 7, le porte-couteau 14 comprend des couteaux 23 qui sont entraînés en rotation selon l'axe X1 par une seconde pièce d'accouplement 24 débouchant sur la face inférieure du porte-couteau 14. Cette seconde pièce d'accouplement 24 vient engrener avec la première pièce d'accouplement 6 lors du montage de l'ensemble prémonté 3 sur la base 2, comme l'illustre la figure 2.

Tel que l'illustrent les figures 4, 5, 8 et 9, la bague de verrouillage 15 est assemblée avec la partie cylindrique inférieure 19 du bol 13 grâce à un premier système d'assemblage à baïonnette qui est mis en œuvre au moyen de quatre éléments saillants 25 agencés sur le contour externe 26 de cette partie cylindrique inférieure 19, tel qu'illustré sur la figure 5, et de quatre dents 27 agencées sur le contour interne 28 de la bague de verrouillage 15. Au moins un des éléments saillants 25 présente une butée 25a pour bloquer la rotation de la bague de verrouillage 15 en arrêtant l'une des dents 27. De préférence chacun des éléments saillants 25 présente une butée 25a pour bloquer la rotation de la bague de verrouillage 15 en arrêtant l'une des dents 27.

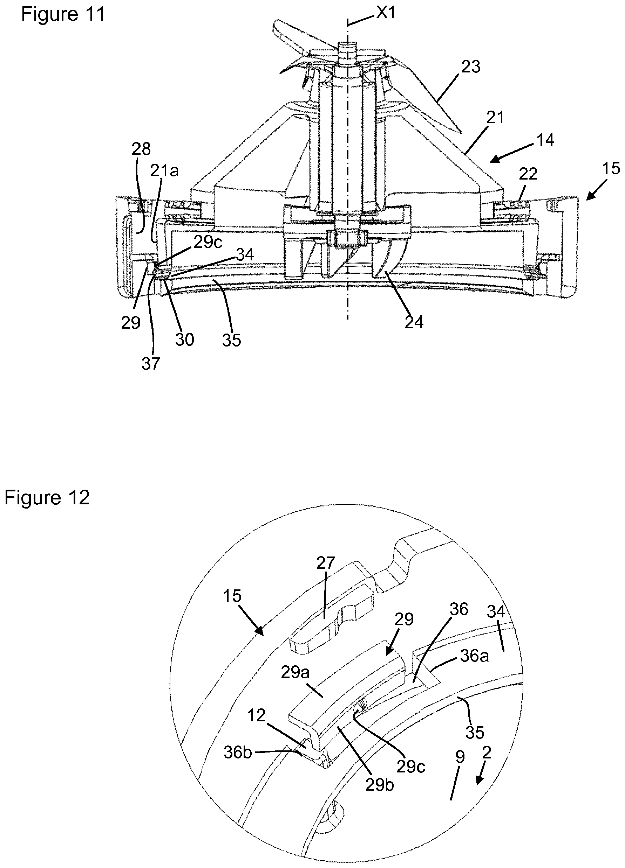

Tel que l'illustrent les figures 7 à 9 et 11 et 12, le contour interne 28 comprend également quatre pattes 29 uniformément réparties. Chaque patte 29 définit une portion circulaire. Lors de l'engagement du porte-couteau 14 sur la bague de verrouillage 15, le contour externe inférieur 21a du corps 21 vient se loger entre les pattes 29, ce qui permet de centrer de manière coaxiale selon l'axe X1 le porte-couteau 14 et la bague de verrouillage 15. Les pattes 29 comprennent chacune une portion d'attache 29a issue du contour interne 28. Chaque portion d'attache 29a s'étend radialement vers l'intérieur du contour interne 28. Chaque portion d'attache 29a est prolongée par une languette 29b s'étendant en équerre vers un fond 34 de la bague de verrouillage 15. Chaque patte 29 comprend également un téton 29c, de préférence de forme demi-sphérique, disposé sur la languette 29b, comme l'illustre la figure 12. Chaque patte 29 dispose d'une flexibilité permettant de déformer sensiblement la languette 29b de sorte à écarter les uns par rapport aux autres les tétons 29c durant l'engagement ou le dégagement du porte-couteau 14. Cet écartement des tétons 29c est assuré par la présence d'une protubérance périphérique 37 agencée au niveau du bord inférieur 30 du porte-couteau 14, cette protubérance périphérique 37 prenant appui sur les tétons 29c lors de l'engagement ou du dégagement du porte-couteau 14. Lors de l'engagement du porte-couteau 14 sur la bague de verrouillage 15, la protubérance périphérique 37 appuie sur le dessus des tétons 29c, ce qui les écarte. Les tétons 29c reprennent ensuite leur position normale du fait de la flexibilité, ce qui les positionne au-dessus de la protubérance périphérique 37, bloquant ainsi le dégagement du porte-couteau 14 en l'absence d'une traction exercée avec la main sur le porte-couteau 14. Le porte-couteau 14 est alors encliqueté sur la bague de verrouillage 15. L'ensemble constitué du porte-couteau 14 et de la bague de verrouillage 15 peut ensuite être assemblé avec le bol 13 pour former l'ensemble prémonté 3. Lors du démontage de cet ensemble prémonté 3, le retrait de la bague de verrouillage 15 vis-à-vis du bol 13 extrait concomitamment le porte-couteau 14 qui reste solidaire de ladite bague de verrouillage 15. En exerçant ensuite une force de traction sur le corps 21, la protubérance périphérique 37 appuie sur le dessous des tétons 29c, ce qui les écarte et décliquète le porte-couteau 14 de la bague de verrouillage 15. En position encliquetée, le bord inférieur 30 du corps 21 vient en appui sur le fond 34 de la bague de verrouillage 15, comme l'illustre la figure 11.

Tel que l'illustrent les figures 4 à 6, la partie cylindrique inférieure 19 comprend sur son contour externe 26 un épaulement 31 qui est muni de deux ailettes 32, 33 disposées symétriquement par rapport à l'axe X1. Un second système d'assemblage à baïonnette est mis en œuvre entre le bol 13 et la base 2 au moyen de ces ailettes 32,33 qui viennent s'engager respectivement dans les rainures 10, 11 précitées. Le verrouillage du bol 13 sur la base 2 est effectué en insérant les ailettes 32, 33 dans les rainures 10, 11 par le bord supérieur cylindrique 7a de la zone de réception 7, puis en effectuant une rotation du bol 13 jusqu'à ce que les ailettes 32, 33 soient logées dans lesdites rainures 10, 11. La collerette 18 vient en appui sur le bord supérieur cylindrique 7a de la zone de réception 7, ce qui délimite la position d'enfoncement de la bague de verrouillage 15 dans la zone de réception 7. De préférence, les ailettes 32, 33 et les rainures 10, 11 sont dimensionnées pour que le verrouillage à baïonnette soit mis en place en effectuant une rotation du bol 13 par rapport à la base 2 comprise entre quinze degrés (15°) et vingt-cinq degrés (25°), de préférence égale à vingt degrés (20°).

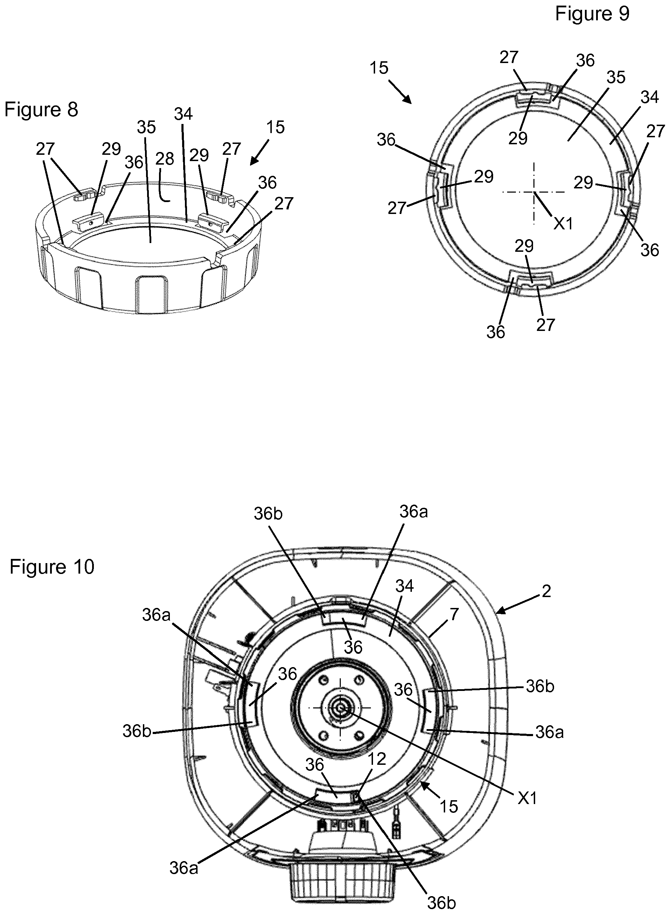

Tel que l'illustrent les figures 2, 3 et 8 à 10, la bague de verrouillage 15 coopère avec le doigt 12 dans la zone de réception 7 lorsque l'ensemble prémonté 3 est positionné sur la base 2 et que l'assemblage est mis en place entre le bol 13 et ladite base 2. Le fond 34 de la bague de verrouillage 15 est muni d'une ouverture 35 permettant le passage de la première pièce d'accouplement 6 lors de l'insertion de la bague de verrouillage 15 et de la partie cylindrique inférieure 19 du bol 13 dans la zone de réception 7, pour son engrènement avec la seconde pièce d'accouplement 24. Ce fond 34 comprend quatre lumières 36 uniformément réparties autour dudit fond 34 et présentant une forme circulaire ou incurvée. Les quatre pattes 29 sont disposées respectivement au-dessus de ces quatre lumières 36, comme l'illustrent les figures 8, 9 et 12. Lorsque les ailettes 32, 33 du bol 13 sont engagées dans les rainures 10, 11 de la base 2 et que la collerette 18 vient en appui sur le bord supérieur cylindrique 7a de la zone de réception 7, délimitant ainsi l'emboîtement de l'ensemble prémonté 3 sur la base 2, le doigt 12 s'engage dans l'une des lumières 36, au niveau de l'une 36a de ses deux extrémités 36a, 36b. Puis, une fois le verrouillage à baïonnette réalisé entre le bol 13 et la base 2, les ailettes 32,33 étant insérées dans les rainures 10, 11 par rotation du bol 13 sur la base 2, de préférence de vingt degrés (20°), ledit doigt 12 vient se loger dans l'autre 36b des deux extrémités 36a, 36b de la lumière 36. Ainsi, durant l'actionnement du moteur 5 entraînant le porte-couteau 14, le doigt 12 assure une butée contre l'extrémité 36b de la lumière 36, ce qui empêche toute rotation éventuelle de la bague de verrouillage 15. On garantit ainsi que la bague de verrouillage 15 reste convenablement assemblée avec le bol 13 grâce au doigt 12 qui est en butée contre l'une des lumières 36.

Il arrive que l'utilisateur assemble mal la bague de verrouillage 15 sur le bol 13 avant de mettre en place l'ensemble prémonté 3 sur la base 2, c'est-à-dire qu'il ne tourne pas complètement la bague de verrouillage 15 sur le bol 13 jusqu'à ce que les dents 27 viennent se loger complètement dans le fond des éléments saillants 25. Dans ce cas, lorsque l'utilisateur procède ensuite à l'assemblage du bol 13 sur la base 2, le doigt 12 prend appui contre l'extrémité 36b de la lumière 36 durant la rotation dudit bol 13 sur ladite base 2, avant même que le bol 13 soit totalement verrouillé sur la base 2, cette rotation permettant alors d'achever la rotation de la bague de verrouillage 15 sur le bol 13 jusqu'à ce que les dents 27 soient convenablement logées dans le fond des éléments saillants 25.

On comprend que les lumières 36 sur la bague de verrouillage 15 seront dimensionnées en rapport avec les dimensions des ailettes 32, 33 et des rainures 10, 11, afin de permettre un verrouillage du bol 13 sur la base 2 par une rotation de quinze degrés (15°) à vingt-cinq degrés (25°), de préférence de vingt degrés (20°).

La description qui précède d'un mode de réalisation de l'appareil 1 n'a aucun caractère limitatif, des variantes pouvant être envisagées sans sortir du cadre de l'invention.

On peut par exemple prévoir un deuxième doigt similaire au doigt 12 et disposé symétriquement à celui-ci par rapport à l'axe X1, dans le fond 9 de la zone de réception 7 sur la base 2.

On pourrait aussi remplacer le système d'assemblage à baïonnette entre le bol 13 et la bague de verrouillage 15 par un système d'assemblage par vissage. Il en est de même pour le système d'assemblage entre le bol 13 et la base 2.

Ainsi le premier système d'assemblage entre le bol 13 et la bague de verrouillage 15 met en œuvre une rotation du bol 13 par rapport à la bague de verrouillage 15, ou vice-versa.

Ainsi le deuxième système d'assemblage entre le bol 13 et la base 2 met en œuvre une rotation du bol 13 par rapport à la base 2, ou vice-versa.

On pourrait aussi positionner la protubérance périphérique 37 à une autre hauteur sur le contour externe inférieur 21a du corps 21, c'est-à-dire de manière distante par rapport au bord inférieur 30 sur le corps 21. Il convient dans ce cas d'ajuster également la position des pattes 29 sur le contour interne 28 de la bague de verrouillage 15, voire les positions des tétons 29c sur ces pattes 29. On peut également prévoir des pattes 29 flexibles de forme différente, voire remplacer les tétons 29c par des bourrelets de forme incurvée s'étendant le long des languettes 29b.

Le mode de réalisation de l'appareil 1 décrit précédemment permet avantageusement de positionner l'ensemble prémonté 3 selon deux positions sur la base 2, avec la poignée 17 à droite ou à gauche du bouton de commande 4. On pourrait envisager une variante simplifiée permettant un seul positionnement de l'ensemble prémonté 3 sur la base 2.

La présente invention n'est nullement limitée aux exemples de réalisation décrits et à leurs variantes, mais englobe de nombreuses modifications dans le cadre des revendications.

## Revendications

1. Appareil (1) de mixage et de mélange pour des préparations alimentaires, qui comprend :
- un bol (13) muni d'un fond ouvert,
- un porte-couteau (14) configuré pour être engagé dans le fond du bol, le porte-couteau (14) comprenant des couteaux (23) montés rotatifs et des premiers moyens d'accouplement (24) assujettis aux couteaux (23),
- une bague de verrouillage (15) configurée pour être positionnée sur le fond du bol (13) et maintenir le porte-couteau (14) engagé dans ledit fond, un premier système d'assemblage (25, 27) étant agencé entre le bol (13) et la bague de verrouillage (15), le premier système d'assemblage (25, 27) entre le bol (13) et la bague de verrouillage (15) mettant en œuvre une rotation du bol (13) par rapport à la bague de verrouillage (15), ou vice-versa,
- une base (2) comprenant des moyens d'entrainement (5) en rotation de seconds moyens d'accouplement (6) complémentaires aux premiers moyens d'accouplement (24) et une zone de réception (7) configurée pour recevoir un ensemble prémonté (3) constitué du bol (13), du porte-couteau (14) et de la bague de verrouillage (15) en accouplant les premiers moyens d'accouplement (24) et les seconds moyens d'accouplement (6) et en logeant la bague de verrouillage (15) dans la zone de réception (7),
- un système de butée (12, 36) agencé entre la zone de réception (7) et la bague de verrouillage (15) pour bloquer la bague de verrouillage (15) en position assemblée sur le bol (13), le système de butée (12, 36) étant mis en place lors du montage de l'ensemble prémonté (3) sur la base (2),
**caractérisé en ce que** l'appareil (1) comprend un second système d'assemblage (10, 11, 32, 33) agencé entre le bol (13) et la base (2), ledit second système d'assemblage (10, 11, 32, 33) entre le bol (13) et la base (2) mettant en œuvre une rotation du bol (13) par rapport à la base (2), ou vice-versa, le second système d'assemblage (10, 11, 32, 33) étant mis en place lors du montage de l'ensemble prémonté (3) sur la base (2), et **en ce que** le système de butée (12, 36) est configuré pour achever si nécessaire la mise en place du premier système d'assemblage (25, 27) entre la bague de verrouillage (15) et le bol (13) par rotation du bol (13) par rapport à la bague de verrouillage (15), ou vice-versa, lors de la mise en place du second système d'assemblage (10, 11, 32, 33) entre le bol (13) et la base (2) par rotation du bol (13) par rapport à la base (2), ou vice-versa.

2. Appareil (1) selon la revendication 1, **caractérisé en ce que** le premier système d'assemblage (25, 27) est du type à baïonnette.

3. Appareil (1) selon la revendication 2, **caractérisé en ce que** le premier système d'assemblage (25, 27) comprend au moins une dent (27) agencée sur un contour interne (28) de la bague de verrouillage (15) et au moins un élément saillant (25) agencé sur un contour externe (26) du bol (13) pour recevoir ladite dent (27) par un mouvement de rotation de la bague de verrouillage (15) sur le bol (13).

4. Appareil (1) selon la revendication 3, **caractérisé en ce que** le premier système d'assemblage (25, 27) comprend au moins deux dents (27) et au moins deux éléments saillants (25) uniformément répartis respectivement sur le contour interne (28) de la bague de verrouillage (15) et sur le contour externe (26) du bol (13).

5. Appareil (1) selon la revendication 3, **caractérisé en ce que** le premier système d'assemblage (25, 27) comprend quatre dents (27) et quatre éléments saillants (25) uniformément répartis respectivement sur le contour interne (28) de la bague de verrouillage (15) et sur le contour externe (26) du bol (13).

6. Appareil (1) selon l'une des revendications 1 à 5, **caractérisé en ce que** le second système d'assemblage (10, 11, 32, 33) est du type à baïonnette.

7. Appareil (1) selon la revendication 6, **caractérisé en ce que** le second système d'assemblage (10, 11, 32, 33) comprend au moins une ailette (32, 33) agencée sur un contour externe (26) du bol (13) et au moins une rainure (10, 11) agencée sur un contour interne (8) de la zone de réception (7) pour recevoir ladite ailette (32, 33) par un mouvement de baïonnette.

8. Appareil (1) selon la revendication 7, **caractérisé en ce que** ladite au moins une ailette (32, 33) est directement issue du bol (13).

9. Appareil (1) selon la revendication 7, **caractérisé en ce que** le second système d'assemblage (10, 11, 32, 33) comprend deux ailettes (32, 33) et deux rainures (10, 11) disposées symétriquement respectivement sur le contour externe (26) du bol (13) et sur le contour interne (8) de la zone de réception (7).

10. Appareil (1) selon la revendication 9, **caractérisé en ce que** les deux ailettes (32, 33) sont directement issues du bol (13).

11. Appareil (1) selon l'une des revendications 1 à 10, **caractérisé en ce que** le système de butée (12, 36) comprend au moins un doigt (12) agencé dans un fond (9) de la zone de réception (7) et au moins une lumière (36) agencée dans un fond (34) de la bague de verrouillage (15), le doigt (12) s'engageant dans la lumière (36) en correspondance avec ledit doigt (12) lors du logement de la bague de verrouillage (15) dans la zone de réception (7).

12. Appareil (1) selon la revendication 11, **caractérisé en ce que** le système de butée (12, 36) comprend un doigt (12) dans le fond (9) de la zone de réception (7) et quatre lumières (36) uniformément réparties dans le fond (34) de la bague de verrouillage (15).

13. Appareil (1) selon l'une des revendication 11 ou 12, **caractérisé en ce que** ladite au moins une lumière (36) et le second système d'assemblage (10, 11, 32, 33) sont configurés pour permettre le montage du bol (13) sur la base (2) et la mise en place du système de butée (12, 36) par une rotation du bol (13) sur la base (2) de l'ordre de quinze à vingt-cinq degrés (15° à 25°), de préférence égale à vingt degrés (20°).

14. Appareil (1) selon l'une des revendications 1 à 13, **caractérisé en ce que** le bol (13) comprend une collerette (18) configurée pour délimiter la position d'enfoncement de la bague de verrouillage (15) dans la zone de réception (7).

15. Appareil (1) selon l'une des revendications 1 à 14, **caractérisé en ce que** le porte-couteau (14) est amovible par rapport à la bague de verrouillage (15).

## Patentansprüche

1. Einrichtung (1) zum Mixen und Mischen für Lebensmittelzubereitungen, Folgendes umfassend:
- eine Schüssel (13), die mit einem offenen Boden versehen ist,
- einen Klingenhalter (14), der konfiguriert ist, um in den Boden der Schüssel eingesetzt zu werden, wobei der Klingenhalter (14) drehende montierte Klingen (23) und erste Kopplungsmittel (24) umfasst, die den Klingen (23) unterstellt sind,
- einen Verriegelungsring (15), der konfiguriert ist, um auf dem Boden der Schüssel (13) positioniert zu werden, und den Klingenhalter (14), der in den Boden eingesetzt ist, zu halten, wobei ein erstes Zusammensetzungssystem (25, 27) zwischen der Schüssel (13) und dem Verriegelungsring (15) angeordnet ist, wobei das erste Zusammensetzungssystem (25, 27) zwischen der Schüssel (13) und dem Verriegelungsring (15) eine Drehung der Schüssel (13) in Bezug auf den Verriegelungsring (15) oder umgekehrt realisiert,
- einen Sockel (2), der Drehantriebsmittel (5) zweiter ergänzender Kopplungsmittel (6) zu den ersten Kopplungsmitteln (24) und eine Aufnahmezone (7) umfasst, die konfiguriert ist, um eine vormontierte Einheit (3), die aus der Schüssel (13), aus dem Klingenhalter (14) und dem Verriegelungsring (15) gebildet wird, zu empfangen, indem die ersten Kopplungsmittel (24) und die zweiten Kopplungsmittel (6) gekoppelt werden und indem der Verriegelungsring (15) in der Aufnahmezone (7) untergebracht wird,
- ein Anschlagsystem (12, 36), das zwischen der Aufnahmezone (7) und dem Verriegelungsring (15) angeordnet ist, um den Verriegelungsring (15) in zusammengesetzter Position auf der Schüssel (13) zu blockieren, wobei das Anschlagsystem (12, 36) bei der Montage der vormontierten Einheit (3) auf dem Sockel (2) angebracht wird,
**dadurch gekennzeichnet, dass** die Einrichtung (1) ein zweites Zusammensetzungssystem (10, 11, 32, 33) umfasst, das zwischen der Schüssel (13) und dem Sockel (2) angeordnet ist, wobei das zweite Zusammensetzungssystem (10, 11, 32, 33) zwischen der Schüssel (13) und dem Sockel (2) eine Drehung der Schüssel (13) in Bezug auf den Sockel (2) oder umgekehrt realisiert, wobei das zweite Zusammensetzungssystem (10, 11, 32, 33) bei der Montage der vormontierten Einheit (3) auf dem Sockel (2) angebracht wird, und dadurch, dass das Anschlagsystem (12, 36) konfiguriert ist, um bei Bedarf das Anbringen des ersten Zusammensetzungssystems (25, 27) zwischen dem Verriegelungsring (15) und der Schüssel (13) durch Drehen der Schüssel (13) in Bezug auf den Verriegelungsring (15) oder umgekehrt, beim Anbringen des zweiten Zusammensetzungssystems (10, 11, 32, 33) zwischen der Schüssel (13) und dem Sockel (2) durch Drehen der Schüssel (13) in Bezug auf den Sockel (2) oder umgekehrt zu vollenden.

2. Einrichtung (1) nach Anspruch 1, **dadurch gekennzeichnet, dass** das erste Zusammensetzungssystem (25, 27) vom Typ mit Bajonett ist.

3. Einrichtung (1) nach Anspruch 2, **dadurch gekennzeichnet, dass** das erste Zusammensetzungssystem (25, 27) mindestens einen Zahn (27) umfasst, der an einer inneren Kontur (28) des Verriegelungsringes (15) angeordnet ist, und mindestens ein hervorstehendes Element (25), das an einer äußeren Kontur (26) der Schüssel (13) angeordnet ist, um den Zahn (27) durch eine Drehbewegung des Verriegelungsringes (15) auf der Schüssel (13) zu empfangen.

4. Einrichtung (1) nach Anspruch 3, **dadurch gekennzeichnet, dass** das erste Zusammensetzungssystem (25, 27) mindestens zwei Zähne (27) und mindestens zwei hervorstehende Elemente (25) umfasst, die gleichmäßig jeweils an der inneren Kontur (28) des Verriegelungsringes (15) und an der äußeren Kontur (26) der Schüssel (13) verteilt sind.

5. Einrichtung (1) nach Anspruch 3, **dadurch gekennzeichnet, dass** das erste Zusammensetzungssystem (25, 27) vier Zähne (27) und vier hervorstehende Elemente (25) umfasst, die gleichmäßig jeweils an der inneren Kontur (28) des Verriegelungsringes (15) und an der äußeren Kontur (26) der Schüssel (13) verteilt sind.

6. Einrichtung (1) nach einem der Ansprüche 1 bis 5, **dadurch gekennzeichnet, dass** das zweite Zusammensetzungssystem (10, 11, 32, 33) vom Typ mit Bajonett ist.

7. Einrichtung (1) nach Anspruch 6, **dadurch gekennzeichnet, dass** das zweite Zusammensetzungssystem (10, 11, 32, 33) mindestens eine Rippe (32, 33) umfasst, die an einer äußeren Kontur (26) der Schüssel (13) angeordnet ist, und mindestens eine Rille (10, 11), die an einer inneren Kontur (8) der Aufnahmezone (7) zum Aufnehmen der Rippe (32, 33) durch eine Bajonettbewegung angeordnet ist.

8. Einrichtung (1) nach Anspruch 7, **dadurch gekennzeichnet, dass** die mindestens eine Rippe (32, 33) direkt aus der Schüssel (13) stammt.

9. Einrichtung (1) nach Anspruch 7, **dadurch gekennzeichnet, dass** das zweite Zusammensetzungssystem (10, 11, 32, 33) zwei Rippen (32, 33) und zwei Rillen (10, 11) umfasst, die symmetrisch jeweils an der äußeren Kontur (26) der Schüssel (13) und an der inneren Kontur (8) der Aufnahmezone (7) angeordnet sind.

10. Einrichtung (1) nach Anspruch 9, **dadurch gekennzeichnet, dass** die beiden Rippen (32, 33) direkt aus der Schüssel (13) stammen.

11. Einrichtung (11) nach einem der Ansprüche 1 bis 10, **dadurch gekennzeichnet, dass** das Anschlagsystem (12, 36) mindestens einen Finger (12) umfasst, der in einem Boden (9) der Aufnahmezone (7) angeordnet ist, und mindestens ein Langloch (36), das in einem Boden (34) des Verriegelungsringes (15) angeordnet ist, wobei der Finger (12) in das Langloch (36), das mit dem Finger (12) übereinstimmt, bei der Aufnahme des Verriegelungsringes (15) in der Aufnahmezone (7) eingreift.

12. Einrichtung (1) nach Anspruch 11, **dadurch gekennzeichnet, dass** das Anschlagsystem (12, 36) einen Finger (12) in dem Boden (9) der Aufnahmezone (7) und vier Langlöcher (36) umfasst, die gleichmäßig in dem Boden (34) des Verriegelungsringes (15) verteilt sind.

13. Einrichtung (1) nach einem der Ansprüche 11 oder 12, **dadurch gekennzeichnet, dass** das mindestens eine Langloch (36) und das zweite Zusammensetzungssystem (10, 11, 32, 33) konfiguriert sind, um die Montage der Schüssel (13) auf dem Sockel (2) und das Anbringen des Anschlagsystems (12, 36) durch eine Drehung der Schüssel (13) auf dem Sockel (2) in der Größenordnung von fünfzehn bis fünfundzwanzig Grad (15° bis 25°), vorzugsweise gleich zwanzig Grad (20°) zu ermöglichen.

14. Einrichtung (1) nach einem der Ansprüche 1 bis 13, **dadurch gekennzeichnet, dass** die Schüssel (13) einen Kragen (18) umfasst, der konfiguriert ist, um die Einpressposition des Verriegelungsringes (15) in die Aufnahmezone (7) zu begrenzen.

15. Einrichtung (1) nach einem der Ansprüche 1 bis 14, **dadurch gekennzeichnet, dass** der Klingenhalter (14) in Bezug auf den Verriegelungsring (15) abnehmbar ist.

## Claims

1. Mixing and blending apparatus (1) for food preparations, which comprises:
- a bowl (13) provided with an open bottom,
- a blade-holder (14) configured to be engaged in the bottom of the bowl, the blade-holder (14) comprising blades (23) rotatably mounted and first coupling means (24) subservient to the blades (23),
- a locking ring (15) configured to be positioned on the bottom of the bowl (13) and to keep the blade-holder (14) engaged in said bottom, a first assembly system (25, 27) being arranged between the bowl (13) and the locking ring (15), the first assembly system (25, 27) between the bowl (13) and the locking ring (15) setting in place a rotation of the bowl (13) with respect to the locking ring (15), or vice versa,
- a base (2) comprising rotation means (5) of second coupling means (6) complementary to the first coupling means (24) and a receiving area (7) configured to receive a pre-mounted assembly (3) consisting of the bowl (13), the blade-holder (14) and the locking ring (15) by coupling the first coupling means (24) and the second coupling means (6) and by housing the locking ring (15) in the receiving area (7),
- a stop system (12, 36) arranged between the receiving area (7) and the locking ring (15) for locking the locking ring (15) in the assembled position on the bowl (13), the stop system (12, 36) being set in place when the pre-mounted assembly (3) is mounted on the base (2),
**characterised in that** the apparatus (1) comprises a second assembly system (10, 11, 32, 33) arranged between the bowl (13) and the base (2), said second assembly system (10, 11, 32, 33) between the bowl (13) and the base (2) setting in place a rotation of the bowl (13) with respect to the base (2), or vice-versa, the second assembly system (10, 11, 32, 33) being set in place during the mounting of the pre-mounted assembly (3) on the base (2), and **in that** the stop system (12, 36) is configured to complete, if necessary, the setting in place of the first assembly system (25, 27) between the locking ring (15) and the bowl (13) by rotation of the bowl (13) with respect to the locking ring (15), or vice-versa, during the setting in place of the second assembly system (10, 11, 32, 33) between the bowl (13) and the base (2) by rotation of the bowl (13) with respect to the base (2), or vice-versa.

2. Apparatus (1) according to claim 1, **characterised in that** the first assembly system (25, 27) is of the bayonet type.

3. Apparatus (1) according to claim 2, **characterised in that** the first assembly system (25, 27) comprises at least one tooth (27) arranged on an inner contour (28) of the locking ring (15) and at least one projecting element (25) arranged on an outer contour (26) of the bowl (13) to receive said tooth (27) by a rotation movement of the locking ring (15) on the bowl (13).

4. Apparatus (1) according to claim 3, **characterised in that** the first assembly system (25, 27) comprises at least two teeth (27) and at least two projecting elements (25) evenly distributed respectively over the inner contour (28) of the locking ring (15) and over the outer contour (26) of the bowl (13).

5. Apparatus (1) according to claim 3, **characterised in that** the first assembly system (25, 27) comprises four teeth (27) and four projecting elements (25) evenly distributed over the inner contour (28) of the locking ring (15) and over the outer contour (26) of the bowl (13).

6. Apparatus (1) according to one of claims 1 to 5, **characterised in that** the second assembly system (10, 11, 32, 33) is of the bayonet type.

7. Apparatus (1) according to claim 6, **characterised in that** the second assembly system (10, 11, 32, 33) comprises at least one fin (32, 33) arranged on an outer contour (26) of the bowl (13) and at least one groove (10, 11) arranged on an inner contour (8) of the receiving area (7) to receive said fin (32, 33) by a bayonet movement.

8. Apparatus (1) according to claim 7, **characterised in that** said at least one fin (32, 33) comes directly from the bowl (13).

9. Apparatus (1) according to claim 7, **characterised in that** the second assembly system (10, 11, 32, 33) comprises two fins (32, 33) and two grooves (10, 11) disposed symmetrically respectively over the outer contour (26) of the bowl (13) and over the inner contour (8) of the receiving area (7).

10. Apparatus (1) according to claim 9, **characterised in that** the two fins (32, 33) directly come from the bowl (13).

11. Apparatus (1) according to one of claims 1 to 10, **characterised in that** the stop system (12, 36) comprises at least one finger (12) arranged in a bottom (9) of the receiving area (7) and at least one space (36) arranged in a bottom (34) of the locking ring (15), the finger (12) being engaged in the space (36) corresponding with said finger (12) during the housing of the locking ring (15) in the receiving area (7).

12. Apparatus (1) according to claim 11, **characterised in that** the stop system (12, 36) comprises a finger (12) in the bottom (9) of the receiving area (7) and four spaces (36) evenly distributed in the bottom (34) of the locking ring (15).

13. Apparatus (1) according to one of claims 11 or 12, **characterised in that** said at least one space (36) and the second assembly system (10, 11, 32, 33) are configured to allow the mounting of the bowl (13) on the base (2) and the setting in place of the stop system (12, 36) by a rotation of the bowl (13) on the base (2) of the order of fifteen to twenty-five degrees (15° to 25°), preferably equal to twenty degrees (20°).

14. Apparatus (1) according to one of claims 1 to 13, **characterised in that** the bowl (13) comprise a collar (18) configured to delimit the sinking position of the locking ring (15) in the receiving area (7).

15. Apparatus (1) according to one of claims 1 to 14, **characterised in that** the blade-holder (14) is removable with respect to the locking ring (15).
